# EUROPEAN PATENT APPLICATION

(11) **EP 1 471 664 A2**
(43) Date of publication of application: **27.10.2004**
(21) Application number: 03256975.8
(22) Date of filing: 04.11.2003
(51) Int. Cl.: H04B 7/195

(54) **Satellite communication system utilizing highly inclined, highly elliptic orbits**

(30) Priority: 25.04.2003 US 423749
(71) Applicant: Northrop Grumman Corporation, Redondo Beach, California, 90278 (US)
(72) Inventor: Less, Gregory P., Hermosa Beach, California 90254 (US); Gruver, James K., Manhattan Beach, California 90266 (US); Keller, Scott L., Manhattan Beach, California 90266 (US); Saunders, Oliver W., Los Angeles, California 90066 (US); Linsky, Stuart T., Rancho Palos Verdes, California 90275 (US); Fashano, Michael, Canyon Lake, California 92587 (US); Cress, Peter H., Manhattan Beach, California 90266 (US)
(74) Representative: Naismith, Robert Stewart

(57) **Abstract**

Satellite communication systems are provided that employ highly inclined, highly elliptical orbits. The satellite communication systems have a satellite constellation phased to provide a ground trace with respect to the earth that is repeated by each of the satellites in the constellation such that the satellites appear to follow one another over similar paths over the earth. Due to the path of the ground trace provided, ground stations can employ a single axis tracking device since the satellites appear to move along similar overlapping paths in opposing directions relative to a user on the ground during communication control handoffs.

## Description

### TECHNICAL FIELD

The present invention relates generally to communications, and more particularly to efficient communications utilizing highly elliptic orbits.

### BACKGROUND OF THE INVENTION

Satellites are employed to transfer data and communications between two locations. The locations can be satellites, ground stations and/or user terminals. The satellites allow information to be relayed to locations in which the earth is between the user and the location the user wishes to communicate. Satellites are particularly useful in situations where the user cannot point in the direction of the location but can point in the direction of the satellite, or the user does not have the power or equipment to communicate directly with the desired remote location. Satellite communications are a useful alternative to conventional terrestrial communications systems, such as land lines, fiber optics lines, microwave repeaters and cell tower systems. A satellite system can be categorized into two general areas which are geostationary satellites that orbit at the same angular velocity as the earth's rotation and appear fixed relative to a point on the earth, and non-geostationary satellites that include all other orbits and appear to be moving relative to a point on the earth. When more than one satellite relay is employed in coordination to cover the earth, the multiple satellite system is collectively referred to as a constellation.

Geostationary satellites have a circular orbit that lies in the plane of the earth's equator and turns about the polar axis of the earth in the same direction with the same period as the rotations of the earth such that the satellite appears to be in a fixed position relative to the surface of the earth. The advantage of geostationary satellites is that ground users see a relatively low change in the line-of-sight (LOS) from the users to the satellites since the satellite appears fixed relative to a ground point on the earth. Therefore, a fixed ground antenna can be employed to communicate with the satellite. Many global services require world wide transmission of their information to the whole world. However, since each of the geostationary satellites only cover part of the world, some other communication mechanism (*e.g.*, satellite-to-satellite links, ground station-to-ground station links) must be employed to disseminate the information from the source to the satellites covering other portions of the world.

One of the most difficult problems with the geosynchronous (GEO) orbit is that there is only one available orbital position or band, which is already saturated with satellites. Satellites occupy the GEO band with only 2 degrees of spacing therebetween, referred to as orbital slots, which are also limited by slot license constraints. Many of the slots are now occupied, making it difficult to find positions for any more geostationary satellites. Additionally, the geostationary orbit is relatively crowded as it extends around the equator and requires at least three satellites to cover most ground stations. The use of a geosynchronous satellite with an inclined orbit would virtually eliminate the stationary, fixed user antenna advantage and would require more satellites to provide good coverage to all latitudes. Additionally, geostationary orbits require the insertion of satellites at a location approximately 22,300 miles (36,000) kilometers above the earth. Therefore, transmission delays due to the time required for radio signals to propagate up to the satellite and back to the earth are a significant problem.

Some non-geostationary orbits include Low earth orbits (LEO), Medium earth orbits (MEO) and highly elliptical orbits (HEO). A LEO system can be employed to minimize signal latency and power requirements. However, LEOs require all the satellites to be in orbit before the system as a whole can offer continuous service and begin to generate revenue. For a global system this requires a huge upfront investment. Another path that can be taken is a MEO system. MEO systems require fewer satellites than LEO systems, but it is unclear whether there is a competitive advantage over the geosynchronous orbit. GEO systems can provide global coverage with fewer satellites than either LEO systems or MEO systems. Furthermore, GEO systems can be deployed gradually, providing regional coverage (and hence revenue) until a full global system is constructed. However, GEO systems have the previously mentioned shortcomings. A somewhat unexplored opportunity lies in another orbit, the highly elliptical orbit (HEO) or Molniya orbit. There are currently no regulatory constraints on Molniya orbit, therefore, no limits on expansion.

Several unsuccessful attempts have been made to provide worldwide global satellite communication services. Satellite systems such as Iridium and Globalstar are prime examples of telecommunications systems that failed because there was a serious shortcoming in their business plans. These businesses were unable to capture timely revenue in order to offset the massive capital investments required to provide a worldwide global satellite communication system. In order to develop a satellite telecommunications business that generates a sufficient return on investment, a company must deploy services and satellites in such a way that limits absolute costs and matches revenues with these costs to minimize negative cash flow.

### SUMMARY OF THE INVENTION

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present invention relates generally to satellite communication systems employing highly elliptical orbits and a method for deploying satellites incrementally to provide area or regional coverage, hemisphere coverage and worldwide coverage. In one aspect of the invention, a satellite communication system is provided that includes a plurality of satellites that move in respective highly elliptical orbits relative to the earth. The plurality of satellites form a satellite constellation that is phased to project a ground pattern along the earth having at least a portion of the ground trace pattern that is repeatable by each satellite to facilitate tracking and communication handoffs and provide substantially continuous coverage for an associated region of the earth.

The ground trace pattern can include a first repeatable generally linear portion located within the western hemisphere and a second repeatable generally linear portion located within the eastern hemisphere. A satellite that provides coverage to the western hemisphere is projected as moving along the first repeatable generally linear portion and a satellite that provides coverage to the eastern portion is projected as moving along the second repeatable generally linear portion. A first repeatable generally hyperbolic portion of the ground trace connects the first repeatable generally linear portion to the second repeatable generally linear portion and a second repeatable generally hyperbolic portion of the ground trace connects the second repeatable generally linear portion to the first repeatable generally linear portion, such that the ground trace is continuous.

Communication control handoffs occur in a first region (e.g., western hemisphere) when an ascending satellite moving from perigee to apogee is projected as moving along the second repeatable generally hyperbolic portion to the first repeatable generally linear portion as it crosses a first acquisition altitude and a descending satellite descends in its orbit from apogee toward perigee that is projected as moving along the first repeatable generally linear portion to the first repeatable generally hyperbolic portion concurrently crosses the first acquisition altitude. Communication control handoffs occur in a second region (*e.g.*, eastern hemisphere) when an ascending satellite moving from perigee to apogee is projected as moving along the first repeatable generally hyperbolic portion to the second repeatable generally linear portion as it crosses a second acquisition altitude and a descending satellite descends in its orbit from apogee toward perigee that is projected as moving along the second repeatable generally linear portion to the second repeatable generally hyperbolic portion concurrently crosses the second acquisition altitude. The handovers in the first region and the second region can occur concurrently or be separated by a predetermined time period. Single axis tracking can be employed by ground stations since the satellites having communication control project movement along the generally linear portions of the ground trace.

In one aspect of the present invention, a satellite communication system is provided having a plurality of satellites that move in respective highly elliptical orbits relative to the earth. The plurality of satellites are phased so that at any given time, a satellite is between a first acquisition altitude and apogee to provide communication coverage to at least a portion of the western hemisphere and a satellite is between a second acquisition altitude and apogee to provide communication coverage to at least a portion of the eastern hemisphere. The plurality of satellites are phased so that a descending satellite and an ascending satellite cross the first acquisition altitude concurrently in which a communication control handoff can be commenced to handoff communication control from the descending satellite to the ascending satellite to provide continuous coverage in the at least a portion of the western hemisphere. Additionally, a descending satellite and an ascending satellite cross the second acquisition altitude concurrently in which a communication control handoff can be commenced to handoff communication control from the descending satellite to the ascending satellite to provide continuous coverage in the at least a portion of the eastern hemisphere.

A plurality of additional satellites can be provided with apogees above one of the northern and southern hemispheres, while the plurality of satellites can be provided with apogees at the other of the northern and southern hemispheres. Therefore, communication coverage can be provided for both the northern hemisphere and southern hemisphere with relatively few additional satellites. For example, three northern apogee satellites can provide northern hemisphere coverage with three southern apogee satellites providing southern hemisphere coverage in a six satellite constellation. Furthermore, four northern apogee satellites can provide northern hemisphere coverage with four southern apogee satellites providing southern hemisphere coverage in an eight satellite constellation.

According to one aspect, the satellite system is deployed in incremental sets so that the cost associated with an entire satellite system can be spread out over time. For example, a first set of satellites can be deployed to provide coverage for an area or region (*e.g.*, country). A second set of satellites can be deployed that cooperate with the first set of satellites to provide regional coverage (*e.g.*, portions of the western hemisphere, portions of the eastern hemisphere). A third set of satellites can be deployed that cooperate with the first and second set of satellites to provide global coverage. Additional satellites can be deployed to increase the number of services in the coverage areas or regions. Prior to each deployment, an analysis can be performed to determine whether additional coverage is desirable.

To the accomplishment of the foregoing and related ends, certain illustrative aspects of the invention are described herein in connection with the following description and the annexed drawings. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the drawings.

### BRIEF DESCRIPTION OF THE DRAWINGS

FIG. 1 illustrates a satellite communication system having a four satellite constellation configuration in accordance with an aspect of the present invention.

FIG. 2 illustrates the satellite communication system of FIG. 1 during a communication control handoff in accordance with an aspect of the present invention.

FIG. 3 illustrates the single axis movement of a ground station during tracking of the satellites in the satellite system of FIG. 1 over a twenty-four hour period in accordance with an aspect of the present invention.

FIG. 4 is a world map that illustrates coverage areas and ground traces of a four satellite constellation in accordance with an aspect of the present invention.

FIG. 5 illustrates a satellite communication system having a ten satellite constellation configuration in accordance with an aspect of the present invention.

FIG. 6 is a world map that illustrates coverage areas and ground traces of an eight satellite constellation in accordance with an aspect of the present invention.

FIG. 7 illustrates a satellite communication system having a two satellite constellation configuration in accordance with an aspect of the present invention.

FIG. 8 illustrates a satellite communication system having a three satellite constellation configuration in accordance with an aspect of the present invention.

FIG. 9 is a world map that illustrates coverage areas and ground traces of a three satellite constellation in accordance with an aspect of the present invention.

Fig. 10 illustrates a methodology for the deploying a satellite system in accordance with an aspect of the present invention.

### DETAILED DESCRIPTION OF INVENTION

The present invention relates generally to satellite communication systems employing highly inclined, highly elliptical orbits. The satellite communication systems have a satellite constellation phased to provide a ground trace with respect to the earth that is repeated by each of the satellites in the constellation such that the satellites appear to follow one another over similar incremental ground paths over the earth. Therefore, the number of satellites required to provide regional communication coverage, multiple regional communication coverage (*e.g.*, northern portions of the western hemisphere, northern portions of the eastern hemisphere, portions of the southern hemisphere) and worldwide communication coverage is minimized. Additionally, due to the path of the ground trace provided, ground stations (e.g., gateways, user terminals) can employ single axis tracking devices since the satellites appear to moving along similar overlapping paths that move in opposing directions along a generally linear portion of the ground trace relative to a user on the ground during communication control handoffs.

The present invention employs critically inclined, highly elliptical orbits to provide communications to fixed and transportable user terminals on the ground. Low earth orbit (LEO) and medium earth orbit (MEO) satellites are often pursued for satellite communications in lieu of the traditional geostationary orbits (GSO). The critically inclined, highly elliptical orbits (HEO) or Molniya orbits are often overlooked in the commercial marketplace. The Molniya orbits can provide substantial coverage of entire hemispheres or the entire earth with significantly fewer spacecraft than the LEO and MEO satellites. This leads to potential cost savings over the development and operations of LEO and MEO systems.

Regional or area coverage can be provided with only two spacecraft employing the highly elliptical orbits. Revenue generation can occur with as few as two spacecrafts without waiting for the entire constellation to be deployed. Northern and portions of the southern hemisphere coverage can be provided with only three or four spacecraft. Worldwide coverage can be provided with only six or eight spacecraft with small holes in coverage. A satellite system employing highly elliptical orbits can be deployed incrementally at stages to cover a region, a hemisphere and then provide worldwide coverage with demand, revenue generation and other factors being considered between stages.

High elevation angles can be provided in northern and southern regions of the globe. Long dwell times over the user terminals minimizes the number of beam to beam or spacecraft to spacecraft handoffs required simplifying the network architecture, reducing cost, and potentially improving quality of service. Service can be provided to customers that may have constraints on their ability to see the MEO and LEO spacecraft due to natural or man made obstructions to the satellite line of sight. Frequencies allocated to the GSO systems can be used increasing system capacity without having to shut down when the satellite crosses or comes within the geo arc like the LEO and MEO systems. The Molniya satellites can be efficiently combined with other satellites in other orbits to provide efficient architectures for worldwide coverage without the above-mentioned coverage holes. This approach still results in lower numbers of spacecraft than LEO/MEO approaches.

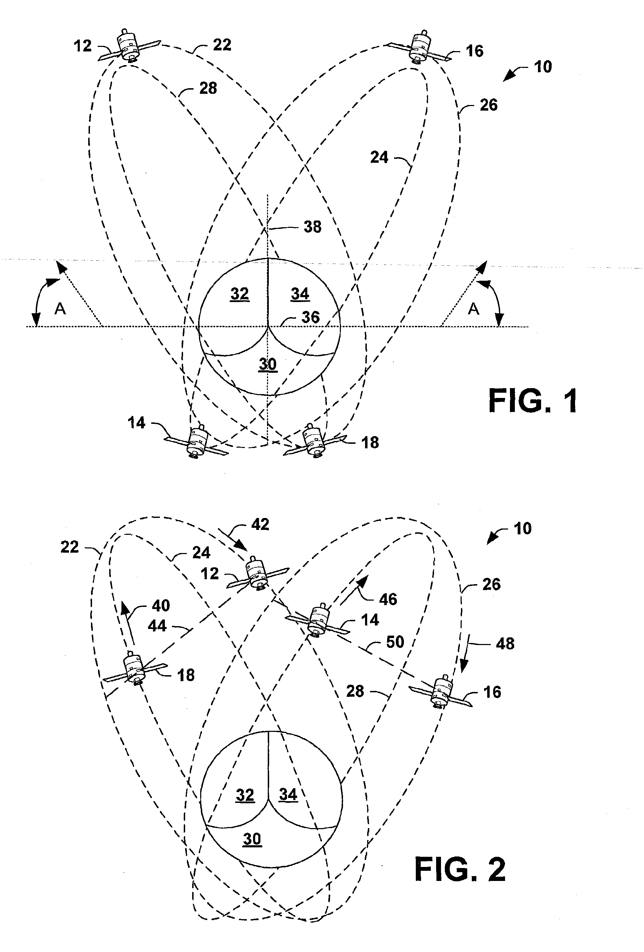

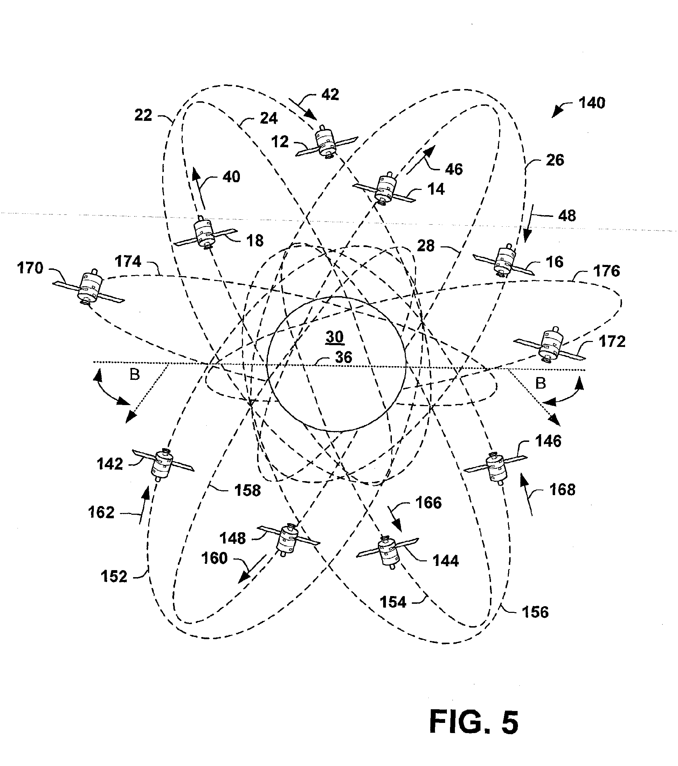

FIGS. 1-6 illustrate worldwide and hemispherical coverage for spacecraft constellation systems employing highly inclined, highly elliptical orbits. Two additional satellites can be provided in other orbits to provide communication coverage in the above-mentioned coverage holes (see FIG. 5). The number of spacecraft employed for providing worldwide and hemispherical coverage in accordance with the present invention is less than the 12, 16, or 24 spacecraft at MEO orbits typically required for global coverage. It is also significantly less then the number of spacecraft designed for LEO orbits typically ranging in the 40s, 60s and even 100s.

FIG. 1 illustrates a satellite communication system 10 having a four satellite constellation configuration in accordance with an aspect of the present invention. The satellite communication system 10 is operative to provide communication coverage in the northern hemisphere of the earth in addition to portions of the southern hemisphere. The satellite communication system 10 includes a first satellite 12 that orbits in a first highly elliptical orbit 22, a second satellite 14 that orbits in a second highly elliptical orbit 24, a third satellite 16 that orbits in a third highly elliptical orbit 26 and a fourth satellite 18 that orbits in a fourth highly elliptical orbit 28 about the earth 30. Each of the highly elliptical orbits have a perigee of about 1111 kilometers and an apogee of about 39,254 kilometers. Additionally, each of the highly elliptical orbits are highly inclined with an inclination angle A from about 50° to about 70° (*e.g.*, 63.4°). The inclination angle A is the angle of a plane of the orbit with respect to a plane through the equator 36, such that the plane through the equator has an inclination angle of 0°. The satellite orbits are phased in such a way that the path that they follow over the earth 30 is the same for each satellite and follow one another in similar incremental ground paths along a ground trace.

In the example, of FIG. 1, the first satellite 12 is at the apogee of the first highly elliptical orbit 22, while the second satellite 14 is at perigee of the second highly elliptical orbit 24. The third satellite 16 is at the apogee of the third highly elliptical orbit 26, while the fourth satellite 18 is at perigee of the fourth highly elliptical orbit 28. The first satellite 12 is providing communication services (e.g., voice services, multimedia, Internet broadband) to the northern hemisphere and portions of the southern hemisphere at a first geographical region 32 (e.g., portion of the western hemisphere, portion of the eastern hemisphere), while the third satellite 16 is providing communication services to the northern hemisphere and portions of the southern hemisphere at a second geographical region 34 (e.g., portion of the eastern hemisphere, portion of the western hemisphere). The first region 32 can be portions of the western hemisphere such as North America, Central America and portions of South America. The second region 34 can be portions of the Eastern Hemisphere including Europe, Asia, Russia and portions of Africa. The satellites move at a substantially faster speed at perigee than at apogee. Therefore, each of the satellites completes its respective orbits in a twelve hour period with eight hours spent at higher operational altitudes and four hours spent at lower non-operational altitudes. Additionally, the earth 30 rotates about the earth's rotational axis 38 so that a 1/2 of a revolution has occurred when a satellite has completed its respective orbit.

Near the end of a first time period (*e.g.*, zero to six hours) in which the first satellite 12 and the third satellite 16 have acquired communication control, the first satellite 12 moves toward perigee (descends), while the fourth satellite 18 moves toward apogee (ascends). Concurrently, the second satellite 14 moves toward apogee, while the third satellite 16 moves toward perigee. The first satellite 12 hands over communication control to the fourth satellite 18 at an acquisition altitude (*e.g.*, 24,000-28000 km). The fourth satellite 18 then provides communication coverage to the first geographical region 32. Similarly, the third satellite 16 hands over communication control to the second satellite 14 at an acquisition altitude (*e.g.*, 24,000-28000 km). The second satellite 14 then provides communication coverage to the second geographical region 34.

The acquisition altitude or handoff altitude depends on the number of satellites in a constellation, the minimum altitude necessary for proper operation and the desired area of coverage. The acquisition altitude is an altitude in which the communication satellite and the handoff satellite appear to be crossing at a point in the sky with respect to a user on the ground. In the four constellation example of FIG. 1, the handovers occur every six hours so that the four satellites will cooperate to cover an entire region over a twenty-four hour period with the four satellites being shared between both the first region 32 and the second region 34 to provide continuous twenty-four hour coverage over the entire northern hemisphere in addition to portions of the southern hemisphere.

At the end of a second time period (*e.g.*, six to twelve hours), the earth has rotated 180° from the time that the first and third satellites 12 and 16 have acquired communication control. Near the end of the second time period, the fourth satellite 18 and the second satellite 14 move toward perigee, and the third satellite 16 and the first satellite 12 move toward apogee. The fourth satellite 18 hands over communication control to the third satellite 18 at the acquisition altitude and the second satellite 14 hands over communication control to the first satellite 12. The third satellite 16 then provides coverage for the first region 32 and the first satellite 12 then provides coverage for the second region 34.

At the end of a third time period (*e.g.*, twelve to eighteen hours), the earth 30 has rotated another 90° or a total of 270° from its original position. Near the end of the third time period, the third satellite 16 and the first satellite 12 move toward perigee, and the fourth satellite 18 and the second satellite 14 move toward apogee. The third satellite 16 hands over communication control to the second satellite 14 at the acquisition altitude and the first satellite 12 hand over communication control to the fourth satellite 18. The second satellite 14 then provides coverage for the first region 32 and the fourth satellite 18 then provides coverage for the second region 34.

At the end of a fourth time period (*e.g.*, eighteen to twenty-four hours), the earth 30 has completed its rotation. The second satellite 14 and the fourth satellite 18 move toward perigee, and the first satellite 12 and the third satellite 16 move toward apogee. The second satellite 14 hands over communication control to the first satellite 12 at the acquisition altitude and the fourth satellite 18 hand over communication control to the third satellite 16. The first satellite 12 then again provides coverage for the first region 32 and the third satellite 16 then again provides coverage for the second region 34, such that the process repeats every twenty-four hours.

FIG. 2 illustrates the satellite communication system 10 during a communication control handoff in accordance with an aspect of the present invention. The first satellite 12 is descending in the first highly elliptical orbit 22 along an arrow 42, while the fourth satellite 18 is ascending in the fourth highly elliptical orbit 28 along an arrow 40. A communication control handoff occurs from the first satellite 12 to the fourth satellite at an acquisition altitude 44. As both the first satellite 12 and the fourth satellite 18 cross the acquisition altitude 44, a handoff routine is invoked by a ground station (*e.g.*, a gateway) located in the first region 32 to switch communication control from the descending satellite 12 to the ascending satellite 18. As seen from the ground station, the ascending satellite 18 and the descending satellite 12 appeared to cross one another in the sky, such that handoff of the communication control is readily facilitated.

During about the same time period, the third satellite 16 is descending in the third highly elliptical orbit 26 along an arrow 48, while the second satellite 14 is ascending in the second highly elliptical orbit 26 along an arrow 46. A communication control handoff occurs from the third satellite 16 to the second satellite 14 at an acquisition altitude 50. As both the second satellite 14 and the third satellite 16 cross the acquisition altitude 50, a handoff routine is invoked by a ground station located in the second region 34 to switch communication control from the descending satellite 16 to the ascending satellite 14. As seen from the ground station, the ascending satellite 14 and the descending satellite 16 appeared to cross one another in the sky, such that handoff of the communication control is readily facilitated. The process repeats each time an ascending satellite and descending satellite reaches acquisition altitudes 44 and 50. It is to be appreciated the ground station in the first region 32 and the ground station in the second region 34 can be interconnected via a ground network (*e*.*g*., Intranet, Internet) to facilitate communication control and communication control handoffs.

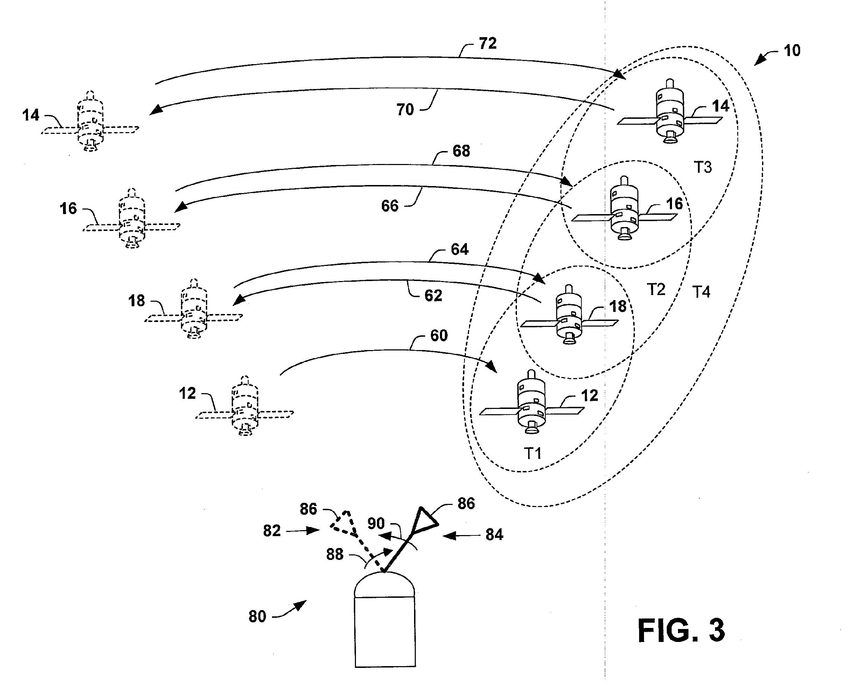

FIG. 3 illustrates the single axis movement of a ground station 80 during tracking of the satellites in the satellite system 10 over a twenty-four hour period in accordance with an aspect of the present invention. The ground station 80 includes an antenna 86 that moves along a single axis between a first position 82 pointing at the satellites at apogee and a second position 84 pointing at the satellites at the acquisition altitude. For example, if the ground station 80 were located in the United Sates, the first position 82 would be pointing toward the north and the second position 84 would be pointing toward the south. However, if the ground station 80 were to be placed in Central America both of its first position 82 and second position 84 would be pointing north at varying degrees. The example of FIG. 3 illustrates a ground station 80 positioned in the first region 32 such that the first satellite 12 is at apogee and providing coverage to the first region 32. It is to be appreciated that the ground station 80 can be placed in the second region 34 to provide coverage for the second region 34.

The ground station 80 can be a gateway that provides communication services that are transmitted to the satellites and relayed to user terminals throughout the respective region. Alternatively, the ground station 80 can be a user terminal that receives communication services that originate from a gateway and are relayed to the user terminal through the satellites. Both the gateways and the ground stations can provide bidirectional communications. Furthermore, a plurality of gateways and user terminals can be provided at different locations throughout a region, such that different communication services can be provide at the different location through sharing of the satellite resources. The satellite can employ a phased array antenna with resizable and steerable beam patterns. For example, a 61-beam pattern in a five ring hex pattern with 16 hoppable beams can be employed to provide coverage to a respective region. The satellites and the ground stations can employ a variety of different frequency bands to provide communication between the satellites, the gateways and the user terminals. For example, the satellite system 10 can employ the GSO band frequencies with uplink frequencies of 29.5-30 GHz and downlink frequencies of 19.7-20.2 GHz.

Referring back to FIG. 3, the antenna 86 is pointing toward the first satellite 12 at apogee such that the first satellite 12 is providing coverage for the first region. As the first satellite12 moves across a path 60 in the sky, the antenna 86 moves along a path 88 from the first position 82 to the second position 84 until the first satellite 12 reaches the acquisition altitude. At a time T1, both the first satellite 12 and the fourth satellite 18 have reached the acquisition altitude, and a handoff of communication control is commenced from the first satellite 12 to the fourth satellite 18. The fourth satellite18 then moves across a path 62 in the sky from acquisition altitude to apogee. The antenna 86 moves along a path 90 from the second position 84 to the first position 82 tracking the fourth satellite 18. The fourth satellite 18 then moves across a path 64 in the sky from apogee to acquisition altitude, while the antenna 86 moves from the first position 82 to the second position 84 along the path 88. At a time T2, both the fourth satellite 18 and the third satellite 16 are at the acquisition altitude. A handoff of communication control is commenced from the fourth satellite 18 to the third satellite 16 at the time T2.

The third satellite 16 then moves across a path 66 in the sky from acquisition altitude to apogee. The antenna 86 moves along the path 90 from the second position 84 to the first position 82 tracking the third satellite 16. The third satellite 16 then moves across a path 68 in the sky from apogee to acquisition altitude, while the antenna 86 moves from the first position 82 to the second position 84 along the path 88. At a time T3, both the third satellite 16 and the second satellite 14 are at the acquisition altitude. A handoff of communication control is commenced from the third satellite 16 to the second satellite 14 at the time T3. The second satellite 14 then moves across a path 70 in the sky from acquisition altitude to apogee. The antenna 86 moves along the path 90 from the second position 84 to the first position 82 tracking the second satellite 14. The second satellite 14 then moves across a path 72 in the sky from apogee to acquisition altitude, while the antenna 86 moves from the first position 82 to the second position 84 along the path 88. At a time T4, both the second satellite 14 and the first satellite 12 are at the acquisition altitude. A handoff of communication control is commenced from the second satellite 14 to the first satellite 12 at the time T4. The tracking and handoff process continuously repeats to provide twenty-four hour coverage in the respective region. The ground station 80 tracks the movement of the satellites 12-18 along the paths 60-72, such that the satellites 12-18 each appear to move along a generally linear sky track enabling the employment of single axis tracking.

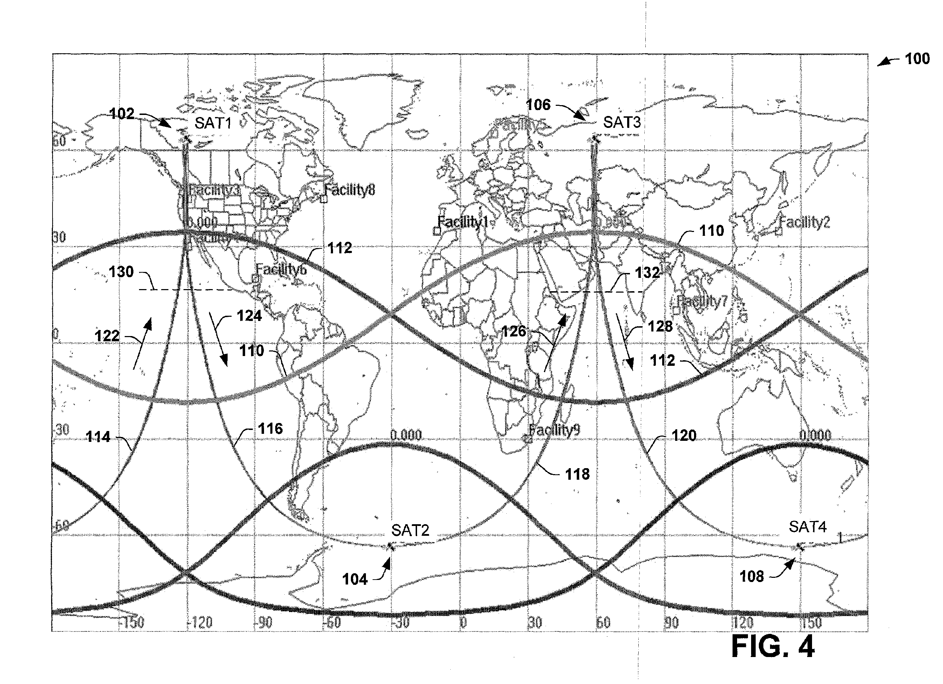

FIG. 4 is a world map 100 that illustrates coverage areas and ground traces of a four satellite constellation in accordance with an aspect of the present invention. The map 100 is a snap shot of the satellite positions at a specific time. A plurality of ground station facilities (*e.g.*, Facility3, Facility 4, Facility6, Facility8) are located in portions of the western hemisphere and a plurality of ground station facilities (*e*.*g*., Facility1, Facility2, Facility5, Facility 7, Facility9) are located in portions of the eastern hemisphere. A first satellite (SAT1) resides at apogee and is viewed from the ground at a point 102. A third satellite (SAT3) also resides at apogee and is viewed from the ground at a point 106. The first satellite includes a coverage area 110 with a relatively sinusoidal shape that is substantially greater in the western hemisphere than in the eastern hemisphere, and the third satellite includes a coverage area 112 with a relatively sinusoidal shape that is substantially greater in the eastern hemisphere than in the western hemisphere A second satellite (SAT2) resides at perigee and is viewed from the ground at a point 104, and a fourth satellite (SAT4) is at perigee and is viewed from the ground at a point 108. The first satellite provides communication coverage to portions of the western hemisphere within the coverage area 110, while the third satellite provides communication coverage to portions of the eastern hemisphere within the coverage area 112.

Each of the satellites are phased in their respective orbits in such a way that they follow a similar ground trace on the earth that is repeated by each of the satellites such that the satellites appear to follow one another over similar ground path increments over the earth. During a first time period, the fourth satellite ascends from perigee toward apogee moving along a first ground trace path 114 in the direction of arrow 122 from the point 108 to the point 102. The first satellite descends from apogee toward perigee moving along a second ground trace path 116 in the direction of arrow 124 from the point 102 to the point 104. At an acquisition altitude 130 at the end of the first time period, the first satellite and the fourth satellite appear to be crossing one another in the sky. A handoff routine is invoked by at least one of the plurality of ground station facilities located in the western hemisphere to switch communication control from the descending satellite (SAT1) to the ascending satellite (SAT4).

Also during the first time period, the second satellite ascends from perigee toward apogee moving along a third ground trace path 118 in the direction of arrow 126 from the point 104 to the point 106. The third satellite descends from apogee toward perigee moving along a fourth ground trace path 120 in the direction of arrow 128 from the point 106 to the point 108. At an acquisition altitude 132 at the end of the first time period, the second satellite and the third satellite appear to be crossing one another in the sky. A handoff routine is invoked by at least one of the plurality of ground station facilities located in the eastern hemisphere to switch communication control from the descending satellite (SAT3) to the ascending satellite (SAT2).

The first ground trace path 114, the second ground trace path 116, the third ground trace path 118 and the fourth ground trace path 118 form a first repeatable generally linear overlapping portion above the acquisition altitude 130 in the western hemisphere and a second repeatable generally linear overlapping portion above the acquisition altitude 132 in the eastern hemisphere. The first generally linear overlapping portion is connected to the second generally linear overlapping portion by a first generally hyperbolic portion and the second generally linear overlapping portion is connected to the first generally linear overlapping portion by a second generally hyperbolic portion such that the ground trace is continuous. At any given time, a satellite that is providing communication coverage to the western hemisphere appears to be moving along the generally linear portion in the western hemisphere and a satellite that is providing communication coverage to the eastern hemisphere appears to be moving along the generally linear portion in the eastern hemisphere. The satellites that are not providing communication coverage at the given time are moving along the generally hyperbolic portions. Therefore, single axis tracking can be employed since the coverage satellites appear to be moving linearly.

During a second time period, the third satellite ascends from perigee toward apogee moving along the first ground trace path 114 in the direction of arrow 122 from the point 108 to the point 102. The fourth satellite descends from apogee toward perigee moving along the second ground trace path 116 in the direction of arrow 124 from the point 102 to the point 104. A handoff occurs at the end of the second time period to switch communication control from the descending satellite (SAT4) to the ascending satellite (SAT3) at the acquisition altitude 130. Also during the second time period, the first satellite ascends from perigee toward apogee moving along the third ground trace path 118 in the direction of arrow 126 from the point 104 to the point 106. The second satellite descends from apogee toward perigee moving along the fourth ground trace path 120 in the direction of arrow 128 from the point 106 to the point 108.
A handoff occurs at the end of the second time period to switch communication control from the descending satellite (SAT2) to the ascending satellite (SAT1) at the acquisition altitude 132.

During a third time period, the second satellite ascends from perigee toward apogee moving along the first ground trace path 114 in the direction of arrow 122 from the point 108 to the point 102. The third satellite descends from apogee toward perigee moving along the second ground trace path 116 in the direction of arrow 124 from the point 102 to the point 104. A handoff occurs at the end of the third time period to switch communication control from the descending satellite (SAT3) to the ascending satellite (SAT2) at the acquisition altitude 130. Also during the third time period, the fourth satellite ascends from perigee toward apogee moving along the third ground trace path 118 in the direction of arrow 126 from the point 104 to the point 106. The first satellite descends from apogee toward perigee moving along the fourth ground trace path 120 in the direction of arrow 128 from the point 106 to the point 108. A handoff occurs at the end of the third time period to switch communication control from the descending satellite (SAT1) to the ascending satellite (SAT4) at the acquisition altitude 132.

During a fourth time period, the first satellite ascends from perigee toward apogee moving along the first ground trace path 114 in the direction of arrow 122 from the point 108 to the point 102. The second satellite descends from apogee toward perigee moving along the second ground trace path 116 in the direction of arrow 124 from the point 102 to the point 104. A handoff occurs at the end of the fourth time period to switch communication control from the descending satellite (SAT2) to the ascending satellite (SAT1) at the acquisition altitude 130. Also during the fourth time period, the third satellite ascends from perigee toward apogee moving along the third ground trace path 118 in the direction of arrow 126 from the point 104 to the point 106. The fourth satellite descends from apogee toward perigee moving along the fourth ground trace path 120 in the direction of arrow 128 from the point 106 to the point 108. A handoff occurs at the end of the fourth time period to switch communication control from the descending satellite (SAT4) to the ascending satellite (SAT3) at the acquisition altitude 132. The process repeats itself every four time periods where a time period is approximately six hours.

FIG. 5 illustrates a satellite communication system 140 having a ten satellite constellation configuration in accordance with an aspect of the present invention. The satellite communication system 140 is operative to provide global communication coverage. The satellite communication system 140 includes the first satellite 12, the second satellite 14, the third satellite 16 and the fourth satellite 18 orbiting in their respective highly elliptical orbits 22, 24, 26 and 28 as illustrated in FIGS. 1-2. The first satellite 12, the second satellite 14, the third satellite 16 and the fourth satellite 18 have highly elliptical orbits with apogees above the northern hemisphere and are operative to provide communication coverage to the northern hemisphere. A repeated discussion of these satellites and their respective highly elliptical orbits will be omitted for the sake of brevity.

The satellite communication system 140 also includes four additional satellites 142-148 having orbits in four additional highly elliptical orbits 152-158, respectively. The four additional satellites have apogees that reside above the southern hemisphere and are operative to provide communication coverage to the southern hemisphere. The satellite communication system 140 includes a fifth satellite 142 that orbits in a fifth highly elliptical orbit 152, a sixth satellite 144 that orbits in a sixth highly elliptical orbit 154, a seventh satellite 146 that orbits in a seventh highly elliptical orbit 156 and an eighth satellite 148 that orbits in an eighth highly elliptical orbit 148 about the earth 30. Each of the highly elliptical orbits have a perigee of about 1111 kilometers and an apogee of about 39,254 kilometers. Additionally, each of the highly elliptical orbits are highly inclined with an inclination angle B from about 50° to about 70° (*e.g.*, 63.4°). The inclination angle B is the angle of a plane of the orbit with respect to a plane through the equator 36, such that the plane through the equator has an inclination angle of 0° where the angle measuring the inplane perigee location (argument of perigee) is different (90 degrees for apogees in the south, 270 degrees for apogees in the north). The satellite orbits 152-158 are phased in such a way that the ground trace that the satellites 142-148 follow over the earth 30 is the same for each of the satellites 152-158. The satellites 142-148 follow one another in similar incremental ground paths along the ground trace. The ground trace of the satellites 152-158 is an inversion of the ground trace of the satellites 12-18.

The fifth satellite 142 provides communication coverage to the southern portion of a first region (*e.g.*, western hemisphere), while the first satellite 12 provides communication coverage to the northern portion of the first region. Additionally, a seventh satellite 146 provides communication coverage to the southern portions of a second region (*e.g.*, eastern hemisphere) and the third satellite 16 provides communication coverage to the northern portions of the second region. In the example of FIG. 5, the fifth satellite 142 is descending in a fifth highly elliptical orbit 152 along an arrow 162, while an eighth satellite 148 is ascending in an eighth highly elliptical orbit 158 along an arrow 160. The seventh satellite 146 is descending in a seventh highly elliptical orbit 156 along an arrow 168, while a sixth satellite 144 is ascending in a sixth highly elliptical orbit 154 along an arrow 166. A communication control handoff occurs from the fifth satellite 142 to the eighth satellite 148 and the seventh satellite 146 to the sixth satellite 144 at respective acquisition altitudes.

At or about the same time, a communication control handoff occurs from the first satellite 12 to the fourth satellite 18 and the third satellite 16 to the second satellite 14 in the northern orbits. The fifth satellite 142, the sixth satellite 144, the seventh satellite 146 and the eight satellite 148 follow the same ground trace and provide six hour handoffs similarly as that illustrated with respect to the first satellite 12, the second satellite 14, the third satellite 16 and the fourth satellite 18 in FIGS. 1-4.

The eight constellation configuration employing the four northern apogee highly elliptical orbits and the four southern apogee highly elliptical orbits provides global coverage with the exception of two small coverage areas. The eight constellation satellite configuration can be efficiently combined with other orbits to provide efficient architectures for worldwide coverage without the above mentioned coverage holes. A ninth satellite 170 orbits in a ninth highly elliptical orbit 174 and a tenth satellite 172 orbits in a tenth highly elliptical orbit 176. The satellites 170 and 172 provide coverage for the above mentioned coverage holes. The ninth highly elliptical orbit 174 and the tenth highly elliptical orbit 176 are not necessarily highly inclined orbits. Alternatively, the eight constellation configuration can be combined with satellites in other orbits (*e.g.*, MEOS, LEOS) to provide coverage for the above mentioned coverage holes. However, the coverage holes are sparsely populated and the eight constellation configuration can provide coverage for a substantial portion (*e.g.*, 96% of subscribers) of the world.

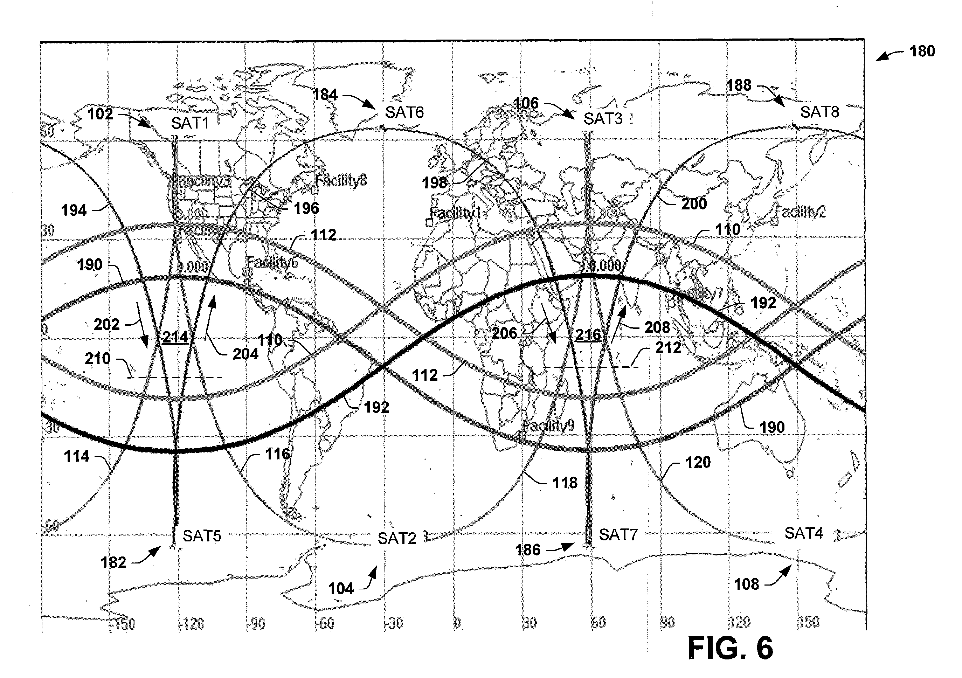

FIG. 6 is a world map 180 that illustrates coverage areas and ground traces of an eight satellite constellation in accordance with an aspect of the present invention. The map 180 is a snap shot of the satellite positions at a specific time. The northern apogee satellites include a first satellite (SAT1), a second satellite (SAT2), a third satellite (SAT3) and a fourth satellite (SAT4). The northern apogee satellites SAT1, SAT2, SAT3, and SAT4 have similar ground paths and coverage areas as discussed with respect to FIG. 4, therefore, detailed discussion of the northern apogee satellites will be omitted for the sake of brevity. Similarly to the map 100 of FIG. 4, a plurality of ground station facilities (*e.g.*, Facility3, Facility 4, Facility6, Facility8) are located in portions of the western hemisphere and a plurality of ground station facilities (*e*.*g*., Facility1, Facility2, Facility 5, Facility 7, Facility9) are located in portions of the eastern hemisphere.

The southern apogee satellites include a fifth satellite (SAT5), a sixth satellite (SAT6), a seventh satellite (SAT7), and an eighth satellite (SAT8). The fifth satellite (SAT5) resides at apogee and is viewed from the ground at a point 182. The seventh satellite (SAT7) also resides at apogee and is viewed from the ground at a point 186. The fifth satellite includes a coverage area 190 with a relatively sinusoidal shape that is substantially greater in the western hemisphere than in the eastern hemisphere, and the seventh satellite includes a coverage area 192 with a relatively sinusoidal shape that is substantially greater in the eastern hemisphere than in the western hemisphere The sixth satellite (SAT6) resides at perigee and is viewed from the ground at a point 184, and the eighth satellite (SAT8) is at perigee and is viewed from the ground at a point 188.

The fifth satellite provides communication coverage to southern portions of the western hemisphere within the coverage area 190, while the seventh satellite provides communication coverage to southern portions of the eastern hemisphere within the coverage area 192. The first satellite provides communication coverage to northern portions of the western hemisphere within the coverage area 110, while the third satellite provides communication coverage to northern portions of the eastern hemisphere within the coverage area 112. A first area 214 in the western hemisphere and a second area 216 in the eastern hemisphere are not provided with communication coverage by any of the eight satellites and are referred to as communication coverage holes. These communication coverage holes can be provided communication coverage employing additional satellites in other orbits (*e.g.*, HEO, LEO, MEO). However, since the majority of these areas are above the ocean, a substantial portion of the world is covered by the eight constellation configuration.

Each of the southern apogee satellites are phased in its respective orbits in such a way that they follow a similar ground trace on the earth that is repeated by each of the satellites such that the satellites appear to follow one another over similar ground path increments over the earth. The northern apogee satellites also follow a similar ground trace that is an inversion of the ground trace of the southern apogee satellites. Both the northern apogee satellites and the southern apogee satellites follow similar ground trace incremental ground paths during the same time periods, therefore, the southern apogee satellite paths will be described with respect to the same time periods as discussed in FIG. 4 for the northern apogee satellites.

During the first time period, the eighth satellite ascends from perigee toward apogee moving along a first ground trace path 194 in the direction of arrow 202 from the point 188 to the point 182. The fifth satellite descends from apogee toward perigee moving along a second ground trace path 196 in the direction of arrow 204 from the point 182 to the point 184. At an acquisition altitude 210 at the end of the first time period, the fifth satellite and the eighth satellite appear to be crossing one another in the sky. A handoff routine is invoked by at least one ground station facility located in the southern portion of the western hemisphere to switch communication control from the descending satellite (SAT5) to the ascending satellite (SAT8).

Also during the first time period, the sixth satellite ascends from perigee toward apogee moving along a sixth ground trace path 198 in the direction of arrow 206 from the point 184 to the point 186. The seventh satellite descends from apogee toward perigee moving along a fourth ground trace path 200 in the direction of arrow 208 from the point 186 to the point 188. At an acquisition altitude 212 at the end of the first time period, the sixth satellite and the seventh satellite appear to be crossing one another in the sky. A handoff routine is invoked by a ground station facility located in the southern portion of the eastern hemisphere to switch communication control from the descending satellite (SAT7) to the ascending satellite (SAT6).

The fifth ground trace path 194, the sixth ground trace path 196, the seventh ground trace path 198 and the eighth ground trace path 200 form a first repeatable generally linear overlapping portion above the acquisition altitude 210 in the western hemisphere and a second repeatable generally linear overlapping portion above the acquisition altitude 112 in the eastern hemisphere. The first generally linear overlapping portion is connected to the second generally linear overlapping portion by a first generally hyperbolic portion and the second generally linear overlapping portion is connected to the first generally linear overlapping portion by a second generally hyperbolic portion such that the ground trace is continuous. At any given time, a satellite that is providing communication coverage to the western hemisphere appears to be moving along the generally linear portion in the western hemisphere and a satellite that is providing communication coverage to the eastern hemisphere appears to be moving along the generally linear portion in the eastern hemisphere. The satellites that are not providing communication coverage at the given time are moving along the generally hyperbolic portions. Therefore, single axis tracking can be employed since the coverage satellites appear to be moving linearly.

During the second time period, the seventh satellite ascends from perigee toward apogee moving along the fifth ground trace path 194 in the direction of arrow 202 from the point 188 to the point 182. The eighth satellite descends from apogee toward perigee moving along the sixth ground trace path 196 in the direction of arrow 204 from the point 182 to the point 184. A handoff occurs at the end of the second time period to switch communication control from the descending satellite (SAT8) to the ascending satellite (SAT7) at the acquisition altitude 210. Also during the second time period, the fifth satellite ascends from perigee toward apogee moving along the seventh ground trace path 198 in the direction of arrow 206 from the point 184 to the point 186. The sixth satellite descends from apogee toward perigee moving along the eighth ground trace path 200 in the direction of arrow 208 from the point 186 to the point 188. A handoff occurs at the end of the second time period to switch communication control from the descending satellite (SAT6) to the ascending satellite (SAT5) at the acquisition altitude 212.

During a third time period, the sixth satellite ascends from perigee toward apogee moving along the fifth ground trace path 194 in the direction of arrow 202 from the point 188 to the point 182. The seventh satellite descends from apogee toward perigee moving along the sixth ground trace path 196 in the direction of arrow 204 from the point 182 to the point 184. A handoff occurs at the end of the third time period to switch communication control from the descending satellite (SAT7) to the ascending satellite (SAT6) at the acquisition altitude 210. Also during the third time period, the eight satellite ascends from perigee toward apogee moving along the seventh ground trace path 198 in the direction of arrow 206 from the point 184 to the point 186. The fifth satellite descends from apogee toward perigee moving along the eighth ground trace path 200 in the direction of arrow 208 from the point 186 to the point 188. A handoff occurs at the end of the third time period to switch communication control from the descending satellite (SAT5) to the ascending satellite (SAT8) at the acquisition altitude 212.

During the fourth time period, the fifth satellite ascends from perigee toward apogee moving along the fifth ground trace path 194 in the direction of arrow 202 from the point 188 to the point 182. The sixth satellite descends from apogee toward perigee moving along the sixth ground trace path 204 in the direction of arrow 204 from the point 182 to the point 184. A handoff occurs at the end of the fourth time period to switch communication control from the descending satellite (SAT6) to the ascending satellite (SAT5) at the acquisition altitude 210. Also during the fourth time period, the seventh satellite ascends from perigee toward apogee moving along the seventh ground trace path 198 in the direction of arrow 206 from the point 184 to the point 186. The eighth satellite descends from apogee toward perigee moving along the eighth ground trace path 200 in the direction of arrow 208 from the point 186 to the point 188. A handoff occurs at thee end of the fourth time period to switch communication control from the descending satellite (SAT8) to the ascending satellite (SAT7) at the acquisition altitude 212. The process repeats itself every four time periods where a time period is approximately six hours.

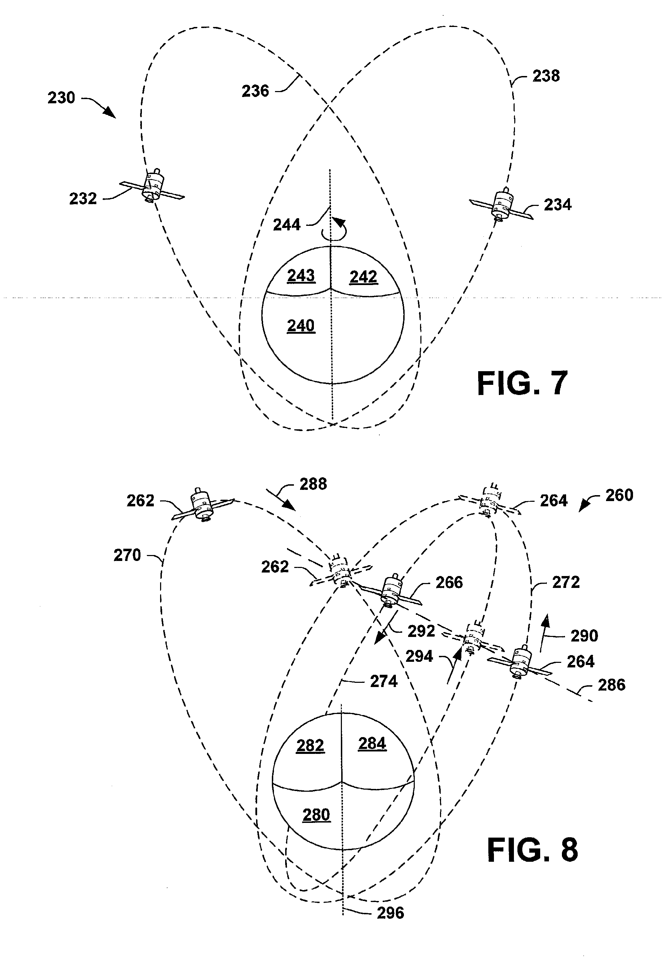

The present invention also allows for providing regional coverage with only two satellites residing in two highly elliptical orbits. Therefore, a satellite system can be deployed incrementally at stages to cover a region, a hemisphere and then provide worldwide coverage with demand, revenue generation and other factors being considered between stages. FIG. 7 illustrates a satellite communication system 230 having a two satellite constellation configuration in accordance with an aspect of the present invention. The satellite communication system 230 is operative to provide communication coverage to a region 242 (e.g., portions of the eastern hemisphere) in the northern hemisphere of the earth 240. The satellite communication system 230 includes a first satellite 232 that orbits in a first highly elliptical orbit 236, and a second satellite 234 that orbits in a second highly elliptical orbit 238. Each of the highly elliptical orbits have a perigee of about 1111 kilometers and an apogee of about 39,254 kilometers. Additionally, each of the highly elliptical orbits are highly inclined with an inclination angle from about 50° to about 70° (*e.g.*, 63.4°).

The satellite orbits 232 and 234 are phased in such a way as to provide continuous coverage to the region 242. Additionally, the satellites 232 and 234 can provide continuous coverage to a region 243. For example, the satellite orbits 232 and 234 can be phased 180° apart in RAAN (Right Ascension of the Ascending Node) to provide coverage around the earth above about 45° latitude. Alternatively, the satellite orbits 232 and 234 can be phased 90° apart in RAAN (Right Ascension of the Ascending Node).

Multiple communication handoffs between the first satellite 232 and the second satellite 234 in cooperation with the earth's rotation facilitate twenty-four hour regional coverage. The ground stations provide tracking in multiple axes to facilitate the continuous coverage employing the two constellation satellite communication system 230. Additional satellites can be deployed in incremental stages to provide northern hemisphere coverage (*e.g.*, 4 satellites) and substantial worldwide coverage (*e.g.*, 8 satellites). The ground stations can then be adjusted to employ single axis tracking.

In one aspect of the invention, a three satellite constellation system can be employed to provide coverage in the northern hemisphere by lowering the acquisition altitude for the handoffs. In the three satellite constellation system, the handoffs occur every eight hours and the coverage area is reduced to certain northern hemisphere regions. FIG. 8 illustrates a satellite communication system 260 having a three satellite constellation configuration in accordance with an aspect of the present invention. The satellite communication system 260 is operative to provide communication coverage to a portion of the northern hemisphere of the earth. The satellite communication system 260 includes a first satellite 262 that orbits in a first highly elliptical orbit 270, a second satellite 264 that orbits in a second highly elliptical orbit 272, and a third satellite 266 that orbits in a third highly elliptical orbit 274 about the earth 280. Each of the highly elliptical orbits have a perigee of about 1111 kilometers and an apogee of about 39,254 kilometers. Additionally, each of the highly elliptical orbits are highly inclined with an inclination angle from about 50° to about 70° *(e.g.,* 63.4°). The satellite orbits are phased in such a way that the path that they follow over the earth 280 is the same for each satellite and follow one another in similar incremental ground paths along a ground trace.

In the example, of FIG. 8, the first satellite 262 is at the apogee of the first highly elliptical orbit 270, while the second satellite 264 of the second highly elliptical orbit 272 and the third satellite 266 of the third highly elliptical orbit 274 are at an acquisition altitude. The first satellite 262 is providing communication services (*e.g.*, voice services, multimedia, Internet broadband) to portions of the northern hemisphere at a first geographical region 282 *(e.g.,* portion of the western hemisphere, portion of the eastern hemisphere), while the third satellite 266 is providing communication services to portions of the northern hemisphere at a second geographical region 284 (*e.g.*, portion of the eastern hemisphere, portion of the western hemisphere). A communication handoff occurs at an acquisition altitude 286 (*e.g.*, 20,000-24000 km) from the third satellite to the second satellite. The second satellite 266 will then provide communication services to portions of the northern hemisphere at a second geographical region 284.

The satellites move at a substantially faster speed at perigee than at apogee. Therefore, each of the satellites complete their respective orbits in a twelve hour period with eight hours spent at higher operational altitudes (at or above acquisition altitude 286) and four hours spent at lower non-operational altitudes (below acquisition altitude 286). A handoff between satellites covering the first region 282 occurs between two of the satellites when the other satellite is at apogee above the second region 284, and a handoff occurs between satellites covering the second region 284 when the other satellite is at apogee above the first region 282. A communication handoff occurs every eight hours between satellites covering the first region 282 and a communication handoff occurs every eight hours between satellites covering the second region 284, where a communication handoff in the second region 284 occurs four hours after a communication handoff in the first region 282.

In the example of FIG. 8, the first satellite 262 is at apogee in the first highly elliptical orbit 270 and provides communication coverage to the first region 282. The second satellite 264 is in the second highly elliptical orbit 272 at the acquisition altitude 286 and the third satellite 266 is in the third highly elliptical orbit 274 at the acquisition altitude 286. The third satellite 266 hands off the communication control to the second satellite 264 to provide communication coverage for the second region 284. After a four hour time period, the satellites 262, 264 and 266 move to the positions illustrated by the satellites represented by dashed lines. The first satellite 262 descends in the first highly elliptical orbit 270 in the direction of arrow 288 to the acquisition altitude 286, and the second satellite 264 ascends in the second highly elliptical orbit in the direction of arrow 290 to apogee. The third satellite 266 descends in the third highly elliptical orbit in the direction of arrow 292 to perigee and then ascends in the direction of arrow 294 to the acquisition altitude 286 in the four hour time period. Additionally, the earth rotates about its rotational axis 296 at about 1/6 of a full rotation. The first satellite 262 then hands off communication control to the third satellite 266 which provides communication coverage to the first region 282, while the second satellite 264 provides communication coverage to the second region 284.

After another four hours, the third satellite 266 will move to apogee providing communication coverage for the first region 282, the first satellite 262 will ascend to acquisition altitude 286 to cover the second region 284 and the second satellite 264 will descend to acquisition altitude 286 to handoff communication control to the first satellite 262. The process will continuously repeat such that a handoff occurs every four hours for a total of six times with a handoff occurring in the first region 282 every eight hours for a total of three times and a handoff occurring in the second region 284 every eight hours for a total of three times, separated by four hour time intervals.

It is to be appreciated that substantial worldwide coverage can be provided by employing three additional satellites in highly elliptical orbits having apogees that are above the southern hemisphere and perigees that are above the northern hemisphere. The southern apogee satellites will follow a ground trace pattern that is an inversion of the ground trace pattern followed by the northern apogee satellites similar to that described for the four and eight constellation configuration.

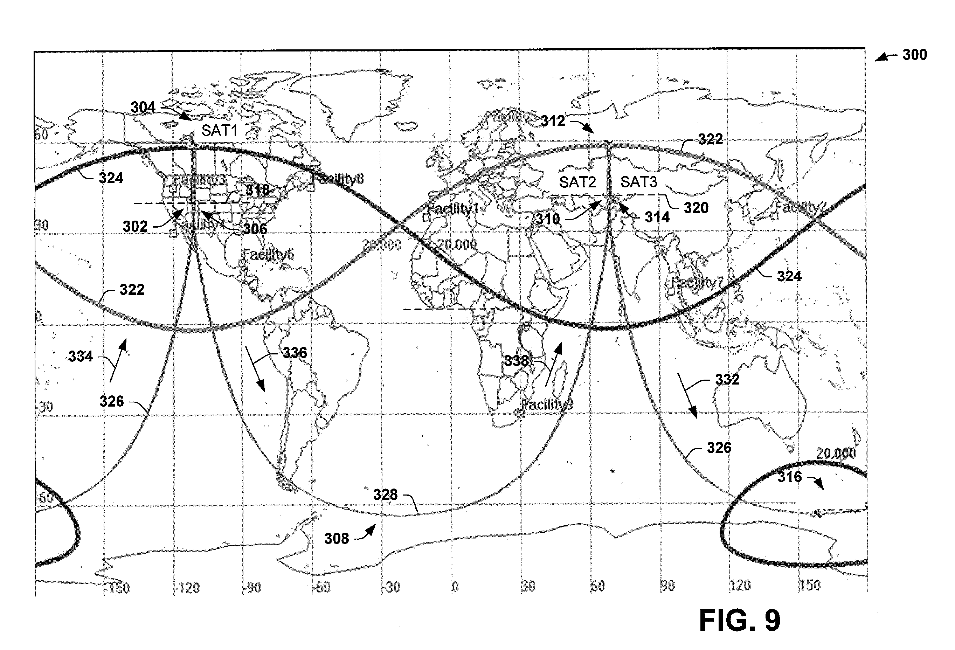

FIG. 9 is a world map 300 that illustrates coverage areas and ground traces of a three satellite constellation in accordance with an aspect of the present invention. The map 300 is a snap shot of the satellite positions at a specific time and illustrates coverage areas and ground traces at a 20° elevation angle to improve quality of service. It is to be appreciated that the present invention could employ a plurality of different elevation angles but is not limited to any specific elevation angle. A plurality of ground station facilities (*e.g.*, Facility3, Facility 4, Facility6, Facility8) are located in portions of the western hemisphere and a plurality of ground station facilities (e.g., Facility1, Facility2, Facility5, Facility 7, Facility9) are located in portions of the eastern hemisphere. A first satellite (SAT1) resides at apogee over the western hemisphere and is viewed from the ground at the point 304. A second satellite (SAT2) resides at an acquisition altitude 320 in the eastern hemisphere and is viewed from the ground at the point 310. A third satellite also resides at the acquisition altitude 320 in the eastern hemisphere and is viewed from the ground at the point 314. A communication control hand off from the third satellite to the second satellite occurs at the acquisition altitude 320.

Each of the satellites are phased in their respective orbits in such a way that they follow a similar ground trace on the earth that is repeated by each of the satellites such that the satellites appear to follow one another over similar ground trace path increments over the earth. The satellite that provides communication coverage to the western hemisphere includes a coverage area 322 with a relatively sinusoidal shape that is substantially greater in the western hemisphere than in the eastern hemisphere. The satellite that provides communication coverage to the eastern hemisphere includes a coverage area 324 with a relatively sinusoidal shape that is substantially greater in the eastern hemisphere than in the western hemisphere.

During a first time period (*e.g.*, zero to four hours), the third satellite descends to perigee from the point 314 to the point 316 moving along a first ground trace path 326 in the direction of arrow 332, and then ascends from perigee to an acquisition altitude 318 continuing along the first ground trace path 326 in the direction of arrow 334 from the point 316 to the point 302. The first satellite descends from apogee toward perigee to the acquisition altitude 318 from the point 304 to the point 306. A communication handoff then occurs from the first satellite to the third satellite, such that the third satellite begins providing communication coverage to the western hemisphere. Also during the first time period, the second satellite ascends to apogee from the point 310 to the point 312 proving communication coverage to the eastern hemisphere.

During a second time period (*e.g.*, four to eight hours), the first satellite descends to perigee from the point 306 to the point 308 moving along a second ground trace path 328 in the direction of arrow 336, and then ascends from perigee to the acquisition altitude 320 continuing along the second ground trace path 328 in the direction of arrow 338 from the point 308 to the point 310. The second satellite descends from apogee toward perigee to the acquisition altitude 320 from the point 312 to the point 314. A communication handoff then occurs from the second satellite to the first satellite, such that the first satellite begins providing communication coverage to the eastern hemisphere. Also during the second time period, the third satellite ascends to apogee from the point 302 to the point 304 providing communication coverage to the western hemisphere.

The first ground trace path 326 and the second ground trace path 328 form a first repeatable generally linear overlapping portion above the acquisition altitude 318 in the western hemisphere and a second repeatable generally linear overlapping portion above the acquisition altitude 320 in the eastern hemisphere. The first generally linear overlapping portion is connected to the second generally linear overlapping portion by a first generally hyperbolic portion and the second generally linear overlapping portion is connected to the first generally linear overlapping portion by a second generally hyperbolic portion such that the ground trace is continuous. At any given time, a satellite that is providing communication coverage to the western hemisphere appears to be moving along the generally linear portion in the western hemisphere and a satellite that is providing communication coverage to the eastern hemisphere appears to be moving along the generally linear portion in the eastern hemisphere. The satellites that are not providing communication coverage at the given time are moving along the generally hyperbolic portions. Therefore, single axis tracking can be employed since the coverage satellites appear to be moving linearly.

During a third time period (*e.g.*, eight to twelve hours), the second satellite descends to perigee from the point 314 to the point 316 moving along the first ground trace path 328 in the direction of arrow 332, and then ascends from perigee to an acquisition altitude 318 continuing along the first ground trace path 326 in the direction of arrow 334 from the point 316 to the point 302. The third satellite descends from apogee toward perigee to the acquisition altitude 318 from the point 304 to the point 306. A communication handoff then occurs from the third satellite to the second satellite, such that the second satellite begins providing communication coverage to the western hemisphere. Also during the third time period, the first satellite ascends to apogee from the point 310 to the point 312 proving communication coverage to the eastern hemisphere.

During a fourth time period (*e.g.*, twelve to sixteen hours), the third satellite descends to perigee from the point 306 to the point 308 moving along the second ground trace path 328 in the direction of arrow 336, and then ascends from perigee to the acquisition altitude 320 continuing along the second ground trace path 328 in the direction of arrow 338 from the point 308 to the point 310. The first satellite descends from apogee toward perigee to the acquisition altitude 320 from the point 312 to the point 314. A communication handoff then occurs from the first satellite to the third satellite, such that the third satellite begins providing communication coverage to the eastern hemisphere. Also during the fourth time period, the second satellite ascends to apogee from the point 302 to the point 304 providing communication coverage to the western hemisphere.

During a fifth time period (*e.g.*, sixteen to twenty hours), the first satellite descends to perigee from the point 314 to the point 316 moving along the first ground trace path 328 in the direction of arrow 332, and then ascends from perigee to an acquisition altitude 318 continuing along the first ground trace path 326 in the direction of arrow 334 from the point 316 to the point 302. The second satellite descends from apogee toward perigee to the acquisition altitude 318 from the point 304 to the point 306. A communication handoff then occurs from the second satellite to the first satellite, such that the first satellite begins providing communication coverage to the western hemisphere. Also during the fifth time period, the third satellite ascends to apogee from the point 310 to the point 312 proving communication coverage to the eastern hemisphere.

During a sixth time period (*e.g.*, twenty to twenty-four hours), the second satellite descends to perigee from the point 306 to the point 308 moving along the second ground trace path 328 in the direction of arrow 336, and then ascends from perigee to the acquisition altitude 320 continuing along the second ground trace path 328 in the direction of arrow 338 from the point 308 to the point 310. The third satellite descends from apogee toward perigee to the acquisition altitude 320 from the point 312 to the point 314. A communication handoff then occurs from the third satellite to the second satellite, such that the second satellite begins providing communication coverage to the eastern hemisphere. Also during the sixth time period, the first satellite ascends to apogee from the point 302 to the point 304 providing communication coverage to the western hemisphere. The process repeats itself every six time periods where a time period is approximately four hours with handoffs occurring every eight hours for both the western hemisphere and the eastern hemisphere separated by four hour intervals.

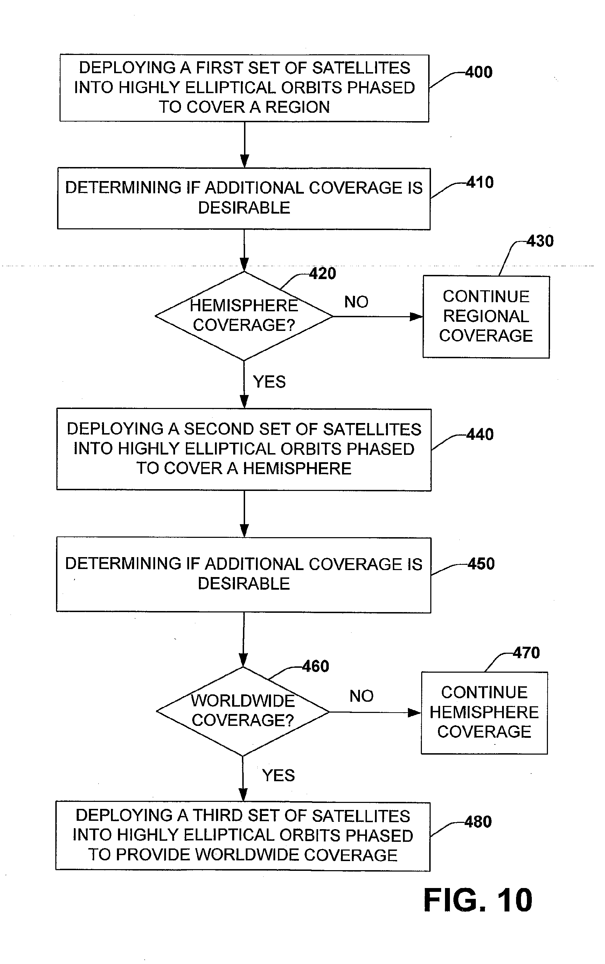

In view of the examples shown and described above, a methodology that can be implemented in accordance with the present invention will be better appreciated with reference to the flow diagrams of FIG. 10. While, for purposes of simplicity of explanation, the methodology is shown and described as executing serially, it is to be understood and appreciated that the present invention is not limited by the order shown, as some aspects may, in accordance with the present invention, occur in different orders and/or concurrently from that shown and described herein. Moreover, not all features shown or described may be needed to implement a methodology in accordance with the present invention.

The present invention also provides for incremental deployment of satellites in a satellite system employing highly elliptical orbits. A highly inclined, highly elliptical orbit satellite system can be deployed gradually so that revenue is generated before the global system as a whole is operational. As the service ramps up, investors have the opportunity to option out of the project or reduce its scope. In turn, this reduces risk. The gradual deployment method introduces a highly inclined, highly elliptical orbit satellite system incrementally, first offering service regionally, then gradually expanding with the option to eventually provide ubiquitous, global coverage.

Furthermore, gradually deploying a highly inclined highly elliptical orbit system reduces investment risk in terms of absolute cost and negative cash flow compared to LEO and MEO systems. Potential revenue associated with capacity expansion is increased relative to GEO systems. In addition, some northern hemisphere consumers with access to only the northern sky can be served (as opposed southern sky access only with GEO). In the southern hemisphere, some consumers with access only to the southern sky can be served (as opposed to northern sky access only with GEO).

FIG. 10 illustrates a methodology for the gradual incremental deployment of satellite systems employing highly elliptical orbits in accordance with an aspect of the present invention. The methodology begins at 400 where a first set of satellites are deployed into highly elliptical orbits to cover an area or region. For example, the area or region can be a country, or a region such as the United States and Canada or Central Europe. The first set of satellites can be two satellites that cover a region, or three satellites that provide services to a respective region. The methodology then proceeds to 410. At 410, a determination is made as to whether additional coverage is desirable. For example, the determination can include determining if there is a demand for services in other regions of the world. The determination can also include considerations of cash flow, investor availability, revenue generation, available margins for particular services, and the overall demand of various communication services. At 420, the determination is utilized to determine if hemisphere coverage is to be provided. If hemisphere coverage is not to be provided (NO), the methodology proceeds to 430 and continues regional coverage. If hemisphere coverage is to be provided (YES), the methodology proceeds to 440.

At 440, a second set of satellites are deployed into highly elliptical orbits phased to cover a hemisphere. The hemisphere can be one of the northern or southern hemisphere based on the determination made at 410. The second set of satellites can include deploying two additional satellites and respective ground stations in additional areas or regions to provide coverage of one of the northern or southern hemispheres. Alternatively, if a three satellite system is employed, the three satellite system can provide coverage for additional areas or regions to provide coverage of one of the northern or southern hemispheres with additional ground stations provided in the additional areas or regions. The methodology then proceeds to 450. At 450, a determination is made to determine if additional coverage is desirable. The determination can also include considerations of demand, cash flow, investor availability, revenue generation, available margins for particular services, and the overall demand of various communication services throughout the world. At 460, the determination is employed to determine if worldwide coverage is to be provided. If worldwide coverage is not to be provided (NO), the methodology proceeds to 470 to continue coverage of the hemisphere. If worldwide coverage is to be provided (YES), the methodology proceeds to 480.

At 480, a third set of satellites are deployed into highly elliptical orbits phased to provide worldwide coverage. The third set of satellites can include deploying four additional satellites and respective ground stations in the other of the northern or southern hemispheres. Alternatively, two additional satellites can be deployed to provide regional coverage in the other of the northern or southern hemisphere. If a three satellite system is employed, three additional satellites can be deployed to provide coverage for the other of the northern or southern hemispheres. Alternatively, two additional satellites can be deployed to provide regional coverage in the other of the northern or southern hemisphere. It is to be appreciated that multiple combinations of satellite systems can be employed with additional ground stations to provide different desired coverage configurations by deploying satellite systems into highly inclined, highly elliptical orbits incrementally minimizing financial risks and maximizing financial returns. Furthermore, additional satellites can be deployed to increase the available services based on another determination.

What has been described above includes exemplary implementations of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the spirit and scope of the appended claims.

## Claims

1. A satellite communication system comprising:
a plurality of satellites that move in respective highly elliptical orbits relative to the earth, the plurality of satellites form a satellite constellation phased to project a ground trace pattern along the earth, such that at least a portion of the ground trace pattern is a repeatable by each satellite of the plurality of satellites to provide substantially continuous coverage for at least an associated region of the earth, the at least a portion of the ground trace pattern that is repeatable comprising a generally linear portion.

2. The satellite communication system of claim 1, the at least a portion of the ground trace pattern that is repeatable comprising a first generally linear portion located within the western hemisphere and a second generally linear portion located within the eastern hemisphere, the satellite constellation being phased such that a satellite that provides coverage to the western hemisphere is continuously projected as moving along the first generally linear portion and the satellite that provides coverage to the eastern hemisphere is continuously projected as moving along the second generally linear portion.

3. The satellite communication system of claim 2, the at least a portion of the ground trace pattern that is repeatable further comprising a first generally hyperbolic portion from the first generally linear portion to the second generally linear portion, and a second generally hyperbolic portion from the second generally linear portion to the first generally linear portion, such that at any given time, a satellite of the plurality of satellites is projected along the first generally linear portion and a satellite of the plurality of satellites is projected along the second generally linear portion.

4. The satellite communication system of claim 1, further comprising a satellite that provides communication coverage to the at least an associated region of the earth is located between apogee and an acquisition altitude within its respective orbit and projects a position on the ground trace moving along the generally linear portion.

5. The satellite communication system of claim 4, where a first satellite and a second satellite are projected as moving along the generally linear portion in opposite directions to facilitate a communication handoff.

6. The satellite communication system of claim 4, further comprising a ground station that employs single axis tracking to track satellites as the satellites move between acquisition altitude and apogee and are projected along the generally linear portion.

7. The satellite communication system of claim 1, the plurality of satellites comprising one of three satellites and four satellites, the plurality of satellites cooperating to provide communication coverage in one of the northern hemisphere and the southern hemisphere in addition to a portion of the other of the northern hemisphere and the southern hemisphere.

8. The satellite communication system of claim 1, further comprising a plurality of additional satellites that move in respective highly elliptical orbits relative to the earth, the plurality of additional satellites project a ground trace pattern along the earth that is an inversion of the ground trace projected by the plurality of satellites, such that at least a portion of the inverted ground trace pattern is repeatable by each satellite of the plurality of additional satellites, the plurality of satellites provide substantially continuous coverage in one of the northern and southern hemisphere of the earth and the plurality of additional satellites provide substantially continuous coverage to the other of the northern and southern hemisphere of the earth, such that substantial worldwide coverage is provided.

9. The satellite communication system of claim 8, the plurality of satellites comprising three satellites and the plurality of additional satellites comprising three satellites.

10. The satellite communication system of claim 8, the plurality of satellites comprising four satellites and the plurality of additional satellites comprising four satellites.
